Europäisches Patentamt

European Patent Office

Office européen des brevets

(19)

(11) Publication number: **0 050 168**
A2

# EUROPEAN PATENT APPLICATION

(21) Application number: **80303493.3**

(22) Date of filing: **03.10.80**

(51) Int. Cl.³: **G 05 B 5/01, G 05 D 3/12**

(43) Date of publication of application: **28.04.82**
Bulletin 82/17

(84) Designated Contracting States: **AT BE CH DE FR GB IT LI LU NL SE**

(71) Applicant: **FUJITSU FANUC LIMITED, 5-1, Asahigaoka, 3-chome, Hino-shi, Tokyo 191 (JP)**

(72) Inventor: **Kurakake, Mitsuo, No. 3-3-10, Tamadaira, Hino-shi, Tokyo Izumi-Hights 103 (JP)**

(74) Representative: **Bedggood, Guy Stuart et al, Haseltine Lake & Co. Hazlitt House 28 Southampton Buildings Chancery Lane, London WC2A 1AT (GB)**

(54) A position control system for a numerical-controlled machine tool.

(57) The position control system has an integrating element (GC1) in the control loop of the machine tool, and a conpensator (CPS) for compensating for instability in the loop caused by the integrating element (GC1). Thus, the position deviation characteristic of the loop can be improved to give accurate position control.

EP 0 050 168 A2

-1-

# A POSITION CONTROL SYSTEM FOR A NUMERICAL-CONTROLLED MACHINE TOOL.

The present invention relates to a position control system for a numerical-controlled machine tool.

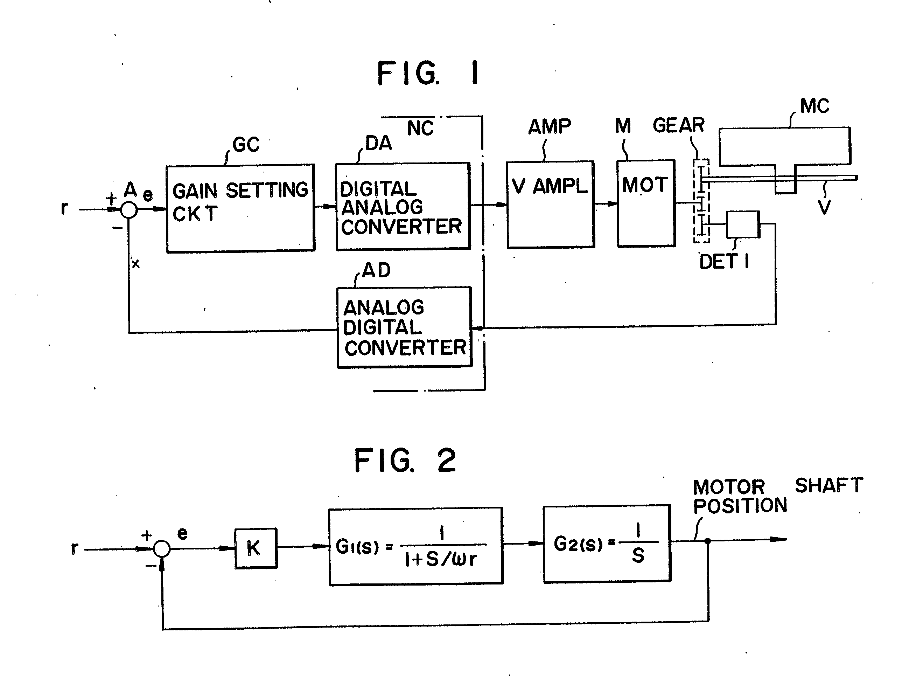

A position control system that has heretofore been proposed for numerical-controlled machine tools is such, for example, as shown in Fig. 1 which employs a semi-closed loop type servomechanism. With this conventional system, for example, the rotational angle of a motor shaft is detected by a position detector DET1, such as a resolver or the like, and the detected position information x is negatively fed back to a position control section NC of a numerical control unit, wherein it is provided via an A-D converter AD to an adder A. In the adder A, a difference is detected between the detected position information x and commanded position information r to obtain a position deviation e. The position deviation e is applied via a gain setting circuit GC and a D-A converter DA to a velocity amplifier AMP, by which a motor M is driven in such a manner as to reduce the position deviation e to zero, rotating a reduction gear GEAR and a ball screw V to control the position of a moving table MC. Fig. 2 shows an example of a block diagram corresponding to Fig. 1. In Fig. 2, reference character K indicates the gain of the gain setting circuit GC; $G_1(s)$ designates the transfer function of a velocity control section composed of the velocity amplifier AMP; $G_2(s)$ identifies

the transfer function of the motor shaft M; and $\omega_V$ denotes the break point angular frequency of the transfer function of the velocity control section. As is evident from Fig. 2, since the mechanical system is placed outside of the closed loop system, the semi-closed loop type servomechanism allows ease in maintaining the closed loop system stable, and accordingly it is adopted in various machine tools.

A discussion will be made of the movement x of the motor shaft in the case where the following ramp input is applied as the commanded position information r to such a numerical-controlled machine tool.

$$r = F \times t \quad \cdots\cdots \quad (1)$$

where F is a feed rate and t is time. The transfer function G(s) of the abovesaid closed loop is given as follows:

$$G(s) = \frac{\dfrac{K}{S(1+\dfrac{s}{\omega_V})}}{1 + \dfrac{K}{S(1+\dfrac{s}{\omega_V})}} = \frac{K}{\dfrac{S^2}{\omega_V} + S + K} \quad \cdots\cdots \quad (2)$$

Letting the Laplace transformation of the input r be represented by $\dot{R}(s)$, a deviation E(s) on its desired value R(s) becomes as follows:

$$E(s) = \frac{1}{1 + G(s)} \times R(s) = \frac{\dfrac{s^2}{\omega_V} + s}{\dfrac{s^2}{\omega_V} + s + K} \times \frac{F}{s^2} \quad \cdots\cdots \quad (3)$$

Accordingly, a steady-state deviation e (t → ∞) becomes as

-3-

follows:

$$e\ (t \to \infty) = \lim_{s \to 0} s \cdot E(s) = \frac{F}{K} \quad \cdots\cdots (4)$$

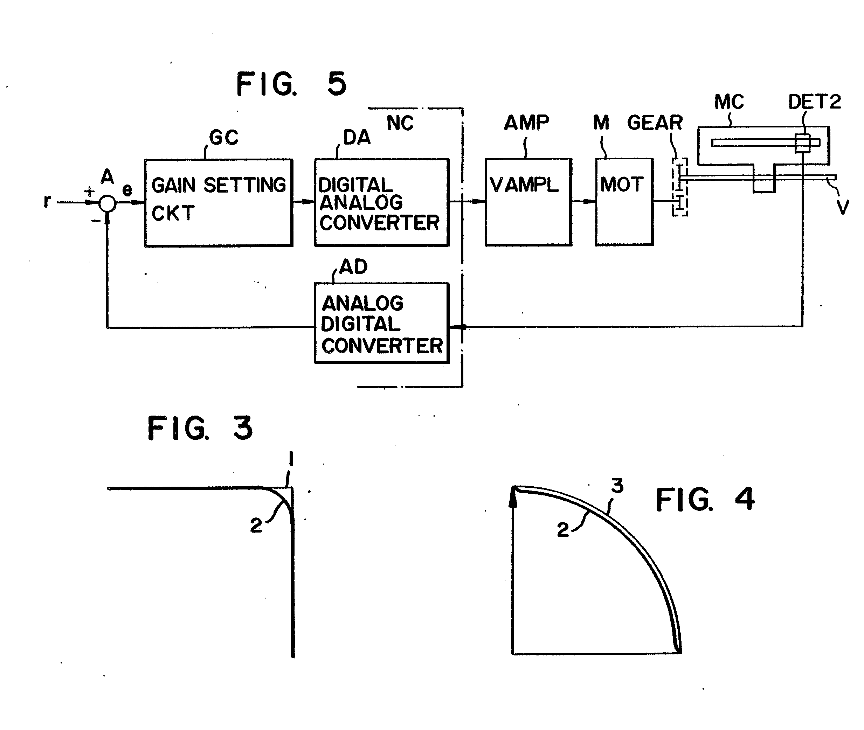

Namely, the movement of the motor shaft, and accordingly the movement of the moving table MC , in its steady-state, has a certain amount of time lag which is proportional to the feed rate and inversely proportional to the gain K. This delay has a direct influence on the actual cutting accuracy. For example, in the case of cutting a work by straight cutting into such a configuration as indicated by reference numeral 1 in Fig. 3, the actual locus of movement of a tool becomes such as indicated by reference numeral 2; namely, the corner of the work is rounded corresponding to the delay. In the case of circular cutting, the locus of movement 2 of the tool deviates from a true circle 3, as illustrated in Fig. 4. Further, also in the case of suddenly stopping the tool while running at a constant speed, the actual movement of the tool overruns by the delay. Consequently, the overruns poses a problem in the case of stopping the cutting operation by stepping on a stroke switch of the machine tool. As is apparent from the equation (4), an increase in the gain K decreases the delay but since there is an upper limit to the magnitude of the gain K which can be taken in a stable region, it is difficult to correct the delay in that range.

Various problems resulting from such a steady-state deviation are encountered not only in the aforesaid semi-closed loop type numerical-controlled machine tool but also in a closed

-4-

loop type numerical-controlled machine tool such, for example, as shown in Fig. 5 in which a position detector DET2, such as an inductosyn or the like, is mounted on a moving part of the machine tool to be ultimately controlled, for example, the moving table and detected position information is negatively fed back so that it may coincide with the commanded position information r. Accordingly, it has been desired to solve the problems.

The present invention provides a position control system for numerical-controlled machine tools which permits highly accurate position control.

The present invention provides a position control system for closed-loop type/ or semi-closed loop numerical-controlled machine tools in which the control loop is stabilized by a compensator using the operating function of a processor, thereby to facilitate the adjustment therefor.

The present invention also provides a simple method for stabilizing the control loop without using the operating function of the processor.

Briefly stated, according to the present invention, in a closed/loop type numerical-controlled machine tool in which or semi-closed detected position information from a movable machine part or a motor driving it is fed back to the input side, there are provided in the loop an integrating element and means for compensating for unstableness of the loop caused by the integrating element, by which the loop is maintained stably and the position deviation characteristic of the

loop is improved to enable highly accurate position
control. The abovesaid compensating means is a compensator
using the operating function of a processor in consideration
of the characteristic of the          loop including the integrating element, or a proportional element connected in
parallel with the integrating element, the constant of which
is adjusted together with the constant of the integrating
element so that the closed loop may be stable.

Reference is made, by way of example, to the accompanying
drawings in which:-

Fig. 1 is a system diagram of a conventional semi-closed
loop type numerical-controlled machine tool;

Fig. 2 is a block diagram of the machine tool shown
in Fig. 1;

Figs. 3 and 4 are diagrams explanatory of the influence
of a steady-state deviation on cutting accuracy;

Fig. 5 is a system diagram of a conventional closed
loop type numerical-controlled machine tool;

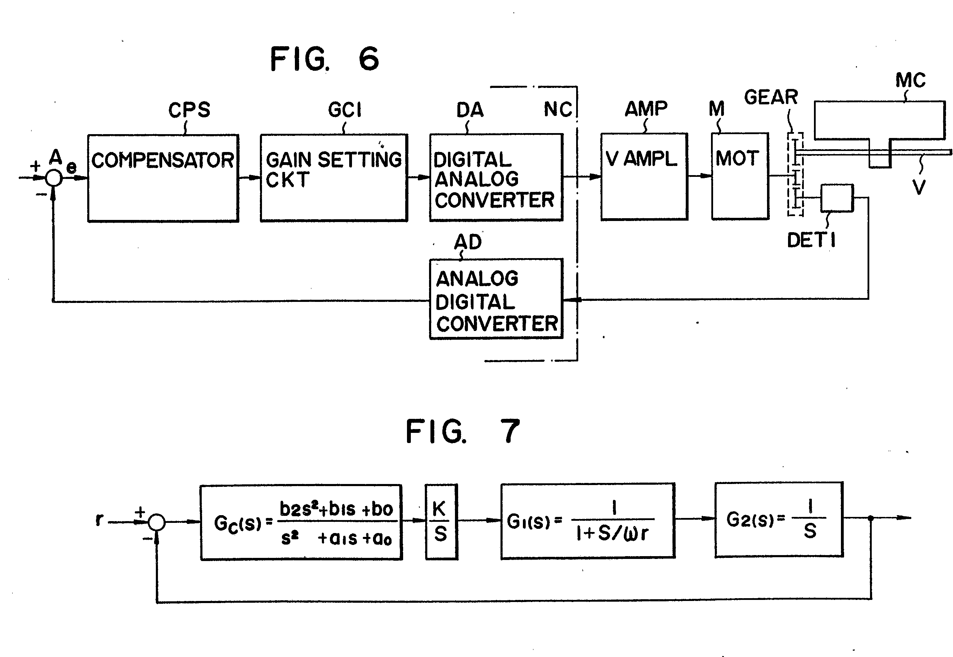

Fig. 6 is a system diagram illustrating an example of
a numerical-controlled machine tool embodying the position
control system of the present invention;

Fig. 7 is a block diagram of the machine tool shown
in Fig. 6;

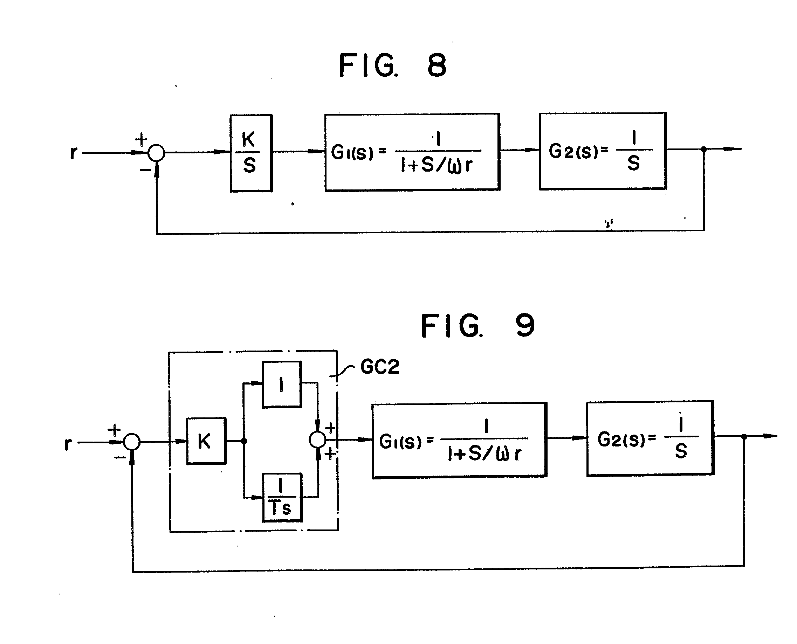

Fig. 8 is a block diagram explanatory of the effect
produced by the present invention; and

Fig. 9 is a block diagram of another example of the
numerical-controlled machine tool embodying the present
invention.

Fig. 6 illustrates the construction of an example of
a numerical-controlled machine tool embodying the position
control system of the present invention. In Fig. 6, parts
corresponding to those in Fig. 1 are identified by the same
reference characters. Reference character CPS indicates a
compensator; and GC1 designates a gain setting circuit. Fig.
7 shows in block form the position control system utilized in
Fig. 6. In Fig. 7, reference characters $G_1(s)$ and $G_2(s)$
identify the transfer functions of the velocity control section
and the motor; and K/s denotes the transfer function of the
gain setting circuit GC1.

According to this embodiment, in the semi-closed
type numerical-controlled machine tool, the gain setting
circuit which is formed by a proportional element in the
prior art is constituted by an integrating element alone, and
the compensator CPS is inserted in the closed loop for stabilizing it. Setting the following equation:

$$Gp(s) = \frac{K}{s} \times G_1(s) \times G_2(s) \quad \cdots\cdots (5)$$

and considering such a closed loop as shown in Fig. 8 in which
the compensator CPS is not included, the steady-state deviation
$e(t \rightarrow \infty)$ relative to the ramp input r becomes

$$e(t \rightarrow \infty) = \lim_{s \to 0} s \cdot E(s) = 0 \quad \cdots\cdots (6)$$

from

$$E(s) = \frac{1}{1 + Gp(s)} \times R(s) = \frac{\dfrac{s^3}{\omega_V} + s^2}{\dfrac{s^3}{\omega_V} + s^2 + K} \times \frac{F}{s^2} \quad \cdots\cdots (7)$$

That is, when the gain setting circuit GC is equipped with an integrating characteristic, the steady-state deviation e is zero. With such an arrangement, however, the closed loop is unstable since its characteristic equation of the closed loop is as follows:

$$\frac{s^3}{\omega_V} + s^2 + K = 0 \quad \cdots\cdots \text{ (8)}$$

In the present embodiment, the compensator CPS inserted in the stage preceding the gain setting circuit GC is to stabilize the closed loop which is made unstable by the gain setting circuit GC1 having the integrating characteristic. A description will be given of the construction of the compensator CPS.

Generally, it is known as the J. B. Pearson's dynamic compensator that when a compensator having a transfer function of second degree Gc(s) is provided at a stage proceeding a transfer function of third degree Gp(s), the characteristic root of the closed loop transfer function Gc(s) Gp(s) of a compensated system can be designated arbitrarily. Then, introducing the transfer function of second degree Gc(s) as follows:

$$Gc(s) = \frac{b_2 s^2 + b_1 s + b_0}{s^2 + a_1 s + a_0} \quad \cdots\cdots \text{ (9)}$$

the compensated system has a transfer function of fifth degree. If the characteristic root is determined in a manner to stabilize the closed loop and in consideration of its rapid response, then the characteristic equation of the closed loop is given by the following equation, using the determined characteristic root $-r_0$ to $-r_4$:

-8-

$$1 + Gc(s) \times Gp(s) = (s+r_0)(s+r_1)(s+r_2)(s+r_3)(s+r_4)$$

$$\cdots\cdots (10)$$

Since coefficients $a_0$, $a_1$, $b_0$, $b_1$ and $b_2$ of the transfer function Gc(s) in the equation (8) are determined by a simple algebraic equation from the above equation, the transfer function Gc(s) of the compensator CPS is determined completely.

Once the coefficients of the compensator CPS have thus been determined, the compensator CPS can be realized, using the operating function of a processor in the manner described below. Transforming the equation (9), it becomes as follows:

$$Gc(s) = b_2 + \frac{(b_1 - b_2 a_1)s + (b_0 - b_2 a_0)}{s^2 + a_1 s + a_0} \quad \cdots\cdots (11)$$

In general, the status equation of minimal degree of a system having such a transfer function Gc(s) is expressed by a differential equation such, for example, as follows:

$$\begin{cases} \dot{x} = \begin{bmatrix} 0 & 1 \\ -a_0 & -a_1 \end{bmatrix} x + \begin{bmatrix} 0 \\ 1 \end{bmatrix} u \\ y = \begin{bmatrix} b_0 - b_2 a_0 \\ b_1 - b_2 a_1 \end{bmatrix} x + b_2 u \end{cases} \quad \cdots\cdots (12)$$

where $\dot{x} = \frac{d}{dt}x$, u is an input, y is an output and x is expressed by $x = \begin{bmatrix} x_1 \\ x_2 \end{bmatrix}$ where $x_1$ and $x_2$ are status variables. Since the equation (12) is a continuous system, it is transformed into the following difference equation in the actual processing of the processor.

$$\begin{cases} x(k+1) = \phi(T) \cdot x(k) + h(T)u(k) \\ \\ y(k+1) = [\begin{matrix} b_0 - b_2 a_0 \\ b_1 - b_2 a_1 \end{matrix}] \cdot x(k+1) + b_2 u(k+1) \end{cases} \quad \cdots\cdots (13)$$

where $\phi(T)$ and $h(T)$ are functions including $a_0$, $a_1$, $b_0$, $b_1$ and $b_2$. The compensator CPS is realized by performing this operation on an online basis by the processor simultaneously with the cutting control.

As described above, according to the present embodiment, in the semi-closed loop type numerical controlled machine tool, the gain setting circuit GC1 is equipped with the integrating characteristic alone and the compensator CPS, which is constituted by using the operating function of a processor, is provided at the stage proceeding the gain setting circuit GC1 for stabilizing the closed loop. Since the steady-state deviation e can be removed without making the closed loop unstable, highly accurate position control can be achieved. Further, since the adjustment for stabilizing the closed loop is carried out by the processor, this embodiment has the advantage that no cumbersome adjustment is involved.

The position where the integrating element is inserted may suffice to be a position where the integrating element appear in the total element. For example, it may also be inserted in the velocity control section, but since the velocity control section is usually produced as one unit and sold together with a machine tool, it is difficult in practice to insert the integrating element in the velocity control

-10-

section and, further, since the arrangement of the velocity
control section differs variously, this poses a problem that
the method of realizing the integrating element differs with
individual arrangements of the velocity control section.
That is the reason for which the integrating element is provided in the gain setting circuit in the present embodiment.
By providing the integrating element on the side of the position control section NC which is the preceding stage of the
velocity control section, one numerical control unit can easily
be used with various machine tools and, in addition, the compensator CPS, including the integrating element, can be realized by the operating function of a processor. The foregoing
description has been given of the case where the compensator
CPS is designed on the basis of the idea of the J. B. Pearson's
dynamic compensator, but a similar compensator can be designed,
using
known output regulator theories.

The foregoing embodiment shows an example of the
arrangement of the control system based on the current control
theory introducing status variables, but the object of the
present invention can also be attained by a system based on
the classical control theory. Fig. 9 illustrates in block
form a semi-closed loop type numerical controlled machine
tool embodying that system. In Fig. 9, reference character
GC2 indicates a gain setting circuit; and $G_1(s)$ and $G_2(s)$
designate the transfer functions of the velocity control
section and the motor.

In this embodiment, an integrating element is provided
in the gain setting circuit GC2 for the position deviation,

-11-

and a proportional element is connected in parallel with the integrating element. The stabilization of the closed loop is achieved by adjusting constants K and T of the proportional element and the integrating element.

In the case of applying the ramp input r to the control system in Fig. 9, the steady-state deviation e $(t \to \infty)$ becomes as follows:

$$e\ (t \to \infty) = \lim_{s \to 0} s \cdot E(s) = 0 \qquad \cdots \cdots (14)$$

from

$$E(s)\ =\ \frac{1}{1 + G_3(s)}\ \times\ R(s)\ =\ \frac{s^2 + \dfrac{s^3}{\omega_V}}{s^2 + \dfrac{s^3}{\omega_V} + Ks + \dfrac{1}{T}}\ \times\ \frac{F}{s^2}$$

$$\cdots \cdots (15)$$

where $G_3(s)$ is the total transfer function of the gain setting circuit GC2, the velocity control section and the motor. Accordingly, no delay is caused by the steady-state deviation. Since the characteristic equation of the closed loop in this case becomes as follows:

$$\frac{s^3}{\omega_V} + s^2 + Ks + \frac{1}{T} = 0 \qquad \cdots \cdots (16)$$

it is possible to stabilize the closed loop and obtain a desired response characteristic by adjusting the constants K and T within the range of $K > \dfrac{1}{T\omega_V}$ so that the response characteristic of the closed loop may become a desirable one. The present embodiment does not necessitate the use of a processor unlike the foregoing embodiment, and hence is advantageous in that the system is simple in arrangement and easy to realize.

-12-

It is also possible to adopt such an arrangement in which the aforesaid dynamic compensator is provided at the preceding stage of the gain setting circuit GC2 in the present embodiment, and in such a case, the adjustment of the constants K and T can be omitted.

In the foregoing embodiments, the present invention is applied to the semi-closed loop type numerical-controlled machine tool in which the position information is fed back from the motor shaft, but it is a matter of course that the invention is also applicable to the closed loop type numerical-controlled machine tool in which the position information is fed back directly from a movable machine part.

As has been described in the foregoing, according to the present invention, in the closed loop type numerical-controlled machine tool, an integrating element is inserted in the closed loop at a proper place and means is provided for compensating for unstableness of the loop which is caused by the inserting of the integrating element. Since the steady-state deviation can be eliminated without making the closed loop unstable, high accurate position control can be achieved.

It will be apparent that many modifications and variations may be effected without departing from the scope of the novel concepts of this invention.

Thus, an embodiment of this invention provides a position control system for a closed loop type numerical-controlled machine tool in which detected position information is fed back to the input side from a movable machine part

-13-

or a motor driving it. In the closed loop there are provided an integrating element and means for compensating for unstableness of the closed loop caused by the integrating element. The integrating element and the compensating means serve to improve the position deviation characteristic of the closed loop, thereby permitting accurate position control.

CLAIMS

1. A position control system for a closed or semi-closed/loop type numerical-controlled machine tool in which detected position information is fed back to the input side from a movable machine part or a motor driving it, characterized in that there are provided in the loop an integrating element and means for compensating for unstableness of the loop caused by the integrating element such as to improve a position deviation characteristic of the loop.

2. A position control system according to claim 1, wherein the compensating means is realized, using the operating functions of a processor adapted to the characteristic of the loop including the integrating element.

3. A position control system according to claim 1 or 2 wherein the compensating means is a dynamic compensator having a transfer function of second degree.

4. A position control system according to claim 1, 2 or 3, wherein the integrating element is provided on the side of a position control section which is a stage preceding a velocity control section.

5. A position control system according to claim 1, 2, 3 or 4, wherein the integrating element and the compensating means are both constituted using the operating function of a processor.

6. A position control system according to claim 1,

-15-

wherein the compensating means is a proportional element connected in parallel with the integrating element, and the constant of the proportional element  is adjusted together with the constant of the integrating element so that the loop becomes          stable.

7.        A numerical-controlled machine tool including a position control system as claimed in any preceding claim.

# FIG. 1

# FIG. 2

$$G_1(s) = \frac{1}{1 + S/\omega r}$$

$$G_2(s) = \frac{1}{S}$$

MOTOR SHAFT
POSITION

FIG. 5

FIG. 4

FIG. 3

# FIG. 6

# FIG. 7

0050168

# FIG. 8

$$r \xrightarrow{+} \quad \boxed{\dfrac{K}{S}} \longrightarrow \boxed{G_1(S) = \dfrac{1}{1+S/\omega r}} \longrightarrow \boxed{G_2(S) = \dfrac{1}{S}} \longrightarrow$$

# FIG. 9

GC2

$$r \xrightarrow{+} \quad \boxed{K} \longrightarrow \boxed{1} \quad \boxed{\dfrac{1}{Ts}} \xrightarrow{+}_{+} \boxed{G_1(S) = \dfrac{1}{1+S/\omega r}} \longrightarrow \boxed{G_2(S) = \dfrac{1}{S}} \longrightarrow$$

4/4